# EUROPEAN PATENT APPLICATION

(11) **EP 4 404 325 A1**
(43) Date of publication of application: **24.07.2024**
(21) Application number: 22869726.4
(22) Date of filing: 09.08.2022
(51) Int. Cl.: H01M 10/0585, H01M 4/02, H01M 4/13, H01M 4/62, H01M 6/16, H01M 6/18, H01M 10/0562

(54) **BATTERY**

(30) Priority: 14.09.2021 JP 2021149103
(71) Applicant: Maxell, Ltd., Kyoto 618-8525 (JP)
(72) Inventor: SATO, Yuta, Otokuni-gun, Kyoto 618-8525 (JP); FURUKAWA, Kazuki, Otokuni-gun, Kyoto 618-8525 (JP); NISHIMURA, Masaki, Otokuni-gun, Kyoto 618-8525 (JP); KAMIZORI, Haruki, Otokuni-gun, Kyoto 618-8525 (JP)
(74) Representative: Diehl & Partner
(86) International application number: PCT/JP2022/030470
(87) International publication number: WO 2023/042579

(57) **Abstract**

Provided is a battery that has a large energy density and excellent output characteristics. A battery of the present invention relates to Sustainable Development Goals 12, 3, 7, and 11.

A battery of an aspect of the present invention includes a plurality of unit electrode bodies. Each unit electrode body includes a positive electrode that includes a molded body of a positive electrode mixture that contains a positive electrode active material, a negative electrode that includes a negative electrode active material layer that contains a negative electrode active material, and a solid electrolyte layer or a separator that is interposed between the positive electrode and the negative electrode. The plurality of unit electrode bodies is stacked on top of each other. Adjacent ones of the unit electrode bodies are connected with each other in series. L/S ≤ 0.5 and 0.02 ≤ L ≤ 0.20, where L (cm) is the thickness of each unit electrode body, and S (cm²) is the electrode area of the unit electrode body. The molded body of the positive electrode mixture and the negative electrode active material layer each have a porosity of 10% or less. When the solid electrolyte layer is included, the solid electrolyte layer has a porosity of 10% or less.

## Description

### Technical Field

The present invention relates to a battery having a large energy density and excellent output characteristics.

### Background Art

Various primary batteries and secondary batteries are currently used as, e.g., power sources of various equipment. Providing various batteries for society can contribute to achieving Goal 12 (to ensure sustainable consumption and production patterns), Goal 3 (to ensure healthy lives and promote well-being for all at all ages), Goal 7 (to ensure access to affordable, reliable, sustainable and modern energy for all), and Goal 11 (to make cities and human settlements inclusive, safe, resilient and sustainable) among 17 Sustainable Development Goals (SDGs) established by the United Nations.

Some of such primary batteries and secondary batteries conventionally include a wound electrode body in which a positive electrode and a negative electrode are stacked and spirally wound with a separator interposed therebetween, or include a stacked electrode body in which a positive electrode and a negative electrode are stacked with a solid electrolyte layer or a separator interposed therebetween.

Further, a plurality of such stacked electrode bodies as described above may be stacked on top of each other to increase the capacity of the battery (higher energy density). For example, Patent Document 1 proposes a stacked battery that includes a stack (stacked body) that includes a plurality of stacked electricity-generating elements (stacked electrode bodies) that each includes a cathode current collector layer, a cathode active material layer, an electrolyte layer, an anode active material layer, and an anode current collector layer. The stacked battery has a ratio h/S > 1, where h (cm) is a length between one end face and the other end face of the stack in a stacked direction, and S (cm²) is the electrode area in a cross section of the stack that is orthogonal to the stacked direction.

Sufficient energy cannot be secured in, e.g., a case where unstable current during operation of the battery is suppressed by decreasing the electrode area S. To increase the energy, Patent Document 1 provides the stacked battery that includes the plurality of stacked electricity-generating elements so that the ratio hiS of the length h (that is, the height of the stack) to the electrode area S is more than one.

### Prior Art Document

### Patent Document

Patent Document 1: JP-A-2019-212590 (e.g., Claims and paragraph [0046])

### Disclosure of Invention

### Problem to be Solved by the Invention

Excellent output characteristics (load characteristics) of a battery are often necessary to secure sufficient capacity even if the battery discharges at a large current value. However, it is not easy for the above-described conventional techniques to increase the output characteristics while increasing the energy density of the battery (the capacity under light load).

With the foregoing in mind, the present invention provides a battery having a large energy density and excellent output characteristics.

### Means for Solving Problem

A battery of an aspect of the present invention includes a plurality of unit electrode bodies. Each unit electrode body includes a positive electrode that includes a molded body of a positive electrode mixture that contains a positive electrode active material, a negative electrode that includes a negative electrode active material layer that contains a negative electrode active material, and a solid electrolyte layer or a separator that is interposed between the positive electrode and the negative electrode. The plurality of unit electrode bodies is stacked on top of each other. Adjacent ones of the unit electrode bodies are connected with each other in series. L/S ≤ 0.5 and 0.02 ≤ L ≤ 0.20, where L (cm) is the thickness of each unit electrode body, and S (cm²) is the electrode area of the unit electrode body. The molded body of the positive electrode mixture and the negative electrode active material layer each have a porosity of 10% or less. When the solid electrolyte layer is included, the solid electrolyte layer has a porosity of 10% or less.

### Effects of the Invention

The present invention provides a battery having a large energy density and excellent output characteristics.

### Brief Description of Drawings

[FIG. 1] FIG. 1 is a cross-sectional view schematically illustrating an exemplary battery of the present invention.
[FIG. 2] FIG. 2 illustrates a region where the porosity of a molded body of a positive electrode mixture is measured.
[FIG. 3] FIG. 3 is a gradation distribution histogram of a scanning electron microscope image for explaining binarization processing.

### Description of the Invention

For example, an increase in an area where the positive electrode faces the negative electrode is desirable for the increase in the output characteristics of the battery.

In each unit electrode body, a solid electrolyte layer or a separator, which is interposed between the negative electrode and the positive electrode, does not contribute to the capacity of the battery. If many unit electrode bodies are put in a battery to increase the output characteristics, the volume in the battery is more occupied by the separators or the solid electrolyte layers. Thus, it is difficult to increase the energy density (capacity) of the battery.

The present inventors have conducted intensive studies and found that both the energy density and output characteristics of the battery can be increased when the thickness L (cm) of each unit electrode body of the battery is within a specific range, a ratio L/S of the thickness L to the electrode area S (cm²) of the unit electrode body is a specific value or less, the porosity of a portion of the positive electrode that contains an active material is a specific value or less, the porosity of a portion of the negative electrode that contains an active material is a specific value or less, and when the unit electrode body includes a solid electrolyte layer, the porosity of the solid electrolyte layer is a specific value or less. From the finding, the present inventors have completed the present invention.

A battery of an aspect of the present invention includes a plurality of unit electrode bodies. Each unit electrode body includes a positive electrode that includes a molded body of a positive electrode mixture that contains a positive electrode active material, a negative electrode that includes a negative electrode active material layer that contains a negative electrode active material, and a solid electrolyte layer or a separator that is interposed between the positive electrode and the negative electrode. The plurality of unit electrode bodies is stacked on top of each other. Adjacent ones of the unit electrode bodies are connected with each other in series. L/S ≤ 0.5 and 0.02 ≤ L ≤ 0.20, where L (cm) is the thickness of each unit electrode body, and S (cm²) is the electrode area of the unit electrode body. The molded body of the positive electrode mixture and the negative electrode active material layer each have a porosity of 10% or less. When the solid electrolyte layer is included, the solid electrolyte layer has a porosity of 10% or less.

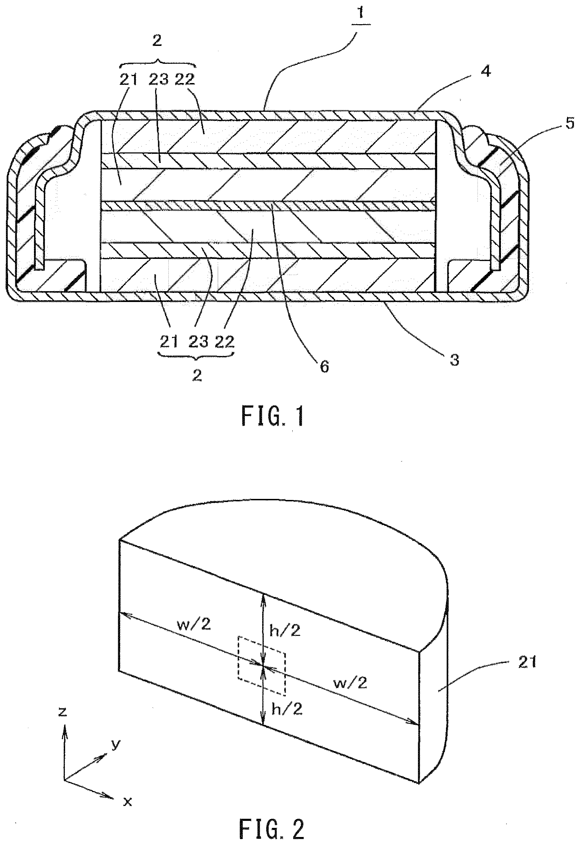

FIG. 1 is a cross-sectional view schematically illustrating an exemplary battery of the present invention. A battery 1 illustrated in FIG. 1 includes an exterior body and two unit electrode bodies (stacked electrode bodies) 2, 2 that are sealed in the exterior body. The exterior body includes an exterior can 3, a sealing can 4, and an annular gasket 5 that is interposed between the exterior can 3 and the sealing can 4. If the unit electrode body 2 includes a separator 23 that is interposed between a positive electrode 21 and a negative electrode 22, the exterior body also contains a non-aqueous electrolyte (not shown).

The sealing can 4 fits in the opening of the exterior can 3 with the gasket 5 interposed therebetween. The opening edge of the exterior can 3 is tightened inward, so that the gasket 5 is in contact with the sealing can 4 and thus seals the opening of the exterior can 3. Consequently, the inside of the battery has a tightly closed structure.

Each unit electrode body 2 includes the positive electrode 21 and the negative electrode 22 stacked on top of each other with a solid electrolyte layer or the separator 23 interposed therebetween. A current collector 6 is interposed between the positive electrode 21 of the upper unit electrode body 2 in FIG. 1 and the negative electrode 22 of the lower unit electrode body 2 in FIG. 1, so that the two unit electrode bodies 2, 2 are connected with each other in series. In FIG. 2, the sealing can 4 is electrically connected with the negative electrode 22 of the upper unit electrode body 2 and functions as the negative electrode terminal of the battery 1, and the exterior can 3 is electrically connected with the positive electrode 21 of the lower unit electrode body 2 and functions as the positive electrode terminal of the battery 1. For the electrical connection, for example, the inner face of the sealing can 4 is directly in contact with the negative electrode 22 of the upper unit electrode body 2, and the inner face of the exterior can 3 is directly in contact with the positive electrode 21 of the lower unit electrode body 2. The exterior can may function as the negative electrode terminal and the sealing can may function as the positive electrode terminal, depending on, e.g., the intended use of the battery.

As illustrated in FIG. 1, the unit electrode body of the battery includes the positive electrode, the negative electrode, and the solid electrolyte layer or the separator therebetween that are stacked on top of each other. The battery includes a stacked body that includes the plurality of stacked unit electrode bodies. In the stacked body, the adjacent unit electrode bodies are connected with each other in series.

The ratio L/S of the thickness L (cm) to the electrode area S (cm²) of each unit electrode body is 0.5 or less, preferably 0.4 or less, and much preferably 0.3 or less, in view of the increase in the output characteristics of the battery. However, L/S of the unit electrode body is preferably 0.001 or more because excessively small L/S may lead to, e.g., the difficulty in manufacturing the unit electrode bodies.

The thickness L of each unit electrode body is 0.02 cm or more, and preferably 0.05 cm or more, in view of the increase in the energy density of the battery. However, an excessively large thickness L of the unit electrode body may decrease the effect of increasing the output characteristics of the battery. Thus, the thickness L of each unit electrode body is 0.20 cm or less, and preferably 0.16 cm or less, in view of the further increase in the output characteristics of the battery.

The electrode area S of each unit electrode body is set within a range where L/S and L satisfy the above values. However, when S of the unit electrode body is large to some extent, the output characteristics are better. Thus, S is preferably 0.01 or more, much preferably 0.125 or more, and further preferably 0.25 or more. Excessively large S of the unit electrode body may lead to, e.g., the difficulty in manufacturing the unit electrode bodies that have a uniform quality. Thus, S is preferably 20 or less, much preferably 10 or less, and further preferably 5 or less.

Herein, the electrode area S of the unit electrode body means the area of common overlap of the positive electrode, the negative electrode, and the solid electrolyte layer or the separator that overlap when they are seen in the stacked direction of the unit electrode body. When the battery includes a plurality of the unit electrode bodies, the electrode area S means the average of the electrode areas of the unit electrode bodies. Herein, the thickness L of the unit electrode body means the total thickness of the positive electrode, the negative electrode, and the solid electrolyte layer or the separator that are seen in a direction perpendicular to the stacked direction of the unit electrode body. When the battery includes a plurality of the unit electrode bodies, the thickness L means a value obtained by dividing the thickness of the battery by the number of the unit electrode bodies.

Examples of batteries of the present invention include a primary battery and a secondary battery, and also include a battery that includes a solid electrolyte layer that is interposed between the positive electrode and the negative electrode (all-solid-state battery), and a battery that includes a separator that is interposed between the positive electrode and the negative electrode, and a non-aqueous electrolyte (non-aqueous electrolyte solution or gel-like electrolyte) that contains a solvent (non-aqueous electrolyte battery except the all-solid-state battery).

### (Positive electrode)

The positive electrode of the battery includes a molded body of a positive electrode mixture that contains a positive electrode active material. The positive electrode may include only the positive electrode mixture molded body, or may include a current collector and a layer of the positive electrode mixture molded body (positive electrode mixture layer) that is formed on the current collector.

If the battery is a primary battery, positive electrode active materials used in conventional non-aqueous electrolyte primary batteries can be used as the positive electrode active material. Specific examples of the positive electrode active material include: manganese dioxide; lithium-containing manganese oxides (such as LiMn₃O₆ and complex oxides that have the same crystal structure as manganese dioxide, such as the β type structure, the y type structure, or the β type and y type mixture structure, and contain Li in an amount of 3.5% by mass or less, preferably 2% by mass or less, much preferably 1.5% by mass or less, and particularly preferably 1% by mass or less); lithium-containing complex oxides such as LiₐTi_{5/3}O₄ (4/3 ≤ a < 7/3); vanadium oxides; niobium oxides; titanium oxides; sulfides such as iron(II) sulfide; graphite fluorides; silver sulfides such as Ag₂S; and nickel oxides such as NiO₂.

If the battery is a secondary battery, positive electrode active materials used in conventional non-aqueous electrolyte secondary batteries, that is, active materials capable of intercalating and deintercalating lithium (Li) ions, can be used as the positive electrode active material. Specific examples of the positive electrode active material include spinel-type lithium manganese complex oxides represented by Li₁₋ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x satisfies 0 ≤ x ≤ 1, and r satisfies 0 ≤ r ≤ 1), layered compounds represented by LiᵣMn₍₁₋ₛ₋ₜ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0 ≤ r ≤ 1.2, 0 < s < 0.5, 0 <_ t <_ 0.5, u + v < 1, - 0.1 ≤ u ≤ 0.2, and 0 ≤ v ≤ 0.1), lithium cobalt complex oxides represented by Li₁₋ₓCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and x satisfies 0 ≤ x ≤ 1, and r satisfies 0 ≤ r ≤ 0.5), lithium nickel complex oxides represented by Li₁₋ₓNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and x satisfies 0 ≤ x ≤ 1, and r satisfies 0 ≤ r ≤ 0.5), olivine-type complex oxides represented by Li₁₊ₛ₋ₓM₁₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x satisfies 0 ≤ x ≤ 1, r satisfies 0 ≤ r ≤ 0.5, and s satisfies 0 ≤ s ≤ 1), and pyrophosphoric acid compounds represented by Li₂₋ₓM₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x satisfies 0 ≤ x ≤ 2, and r satisfies 0 ≤ r ≤ 0.5). These compounds may be used alone or in combination of two or more.

If the battery is an all-solid-state secondary battery, the average particle size of the positive electrode active material is preferably 1 pm or more, and much preferably 2 pm or more, and also preferably 10 pm or less, and much preferably 8 pm or less. The positive electrode active material may be primary particles or secondary particles constituted by aggregated primary particles. When the positive electrode active material has an average particle size within the above range, the interface between the positive electrode active material and the solid electrolyte contained in the positive electrode is large, and thus the output characteristics of the battery are further improved.

Herein, the average particle size of the various particles (positive electrode active material, solid electrolytes, etc.) means the value of the diameter corresponding to the volume-based cumulative frequency of 50% (D₅₀) when the cumulative volume of particles, starting from smaller sizes, is determined using a particle size distribution measuring device, e.g., a microtrac particle size distribution measuring device "HRA9320" manufactured by Nikkiso Co., Ltd.

If the battery is an all-solid-state secondary battery, it is preferable that the positive electrode active material includes a reaction-restricting layer on its surface to restrict the reaction between the positive electrode active material and the solid electrolyte contained in the positive electrode.

When the positive electrode active material is directly in contact with the solid electrolyte in the positive electrode mixture molded body, the solid electrolyte is oxidized and forms a resistance layer, which may decrease the ion conductivity in the molded body. The reaction-restricting layer for restricting the reaction between the positive electrode active material and the solid electrolyte is provided on the surface of the positive electrode active material to prevent the direct contact between the positive electrode active material and the solid electrolyte to thus restrict the decrease in the ion conductivity in the molded body caused by the oxidation of the solid electrolyte.

It is sufficient that the reaction-restricting layer is constituted by a material that has ion conductivity and can restrict the reaction between the positive electrode active material and the solid electrolyte. Examples of the material that can constitute the reaction-restricting layer include oxides that contain Li and at least one element selected from the group consisting of Nb, P, B, Si, Ge, Ti, and Zr. The more specific examples include Nb-containing oxides such as LiNbOs, and Li₃PO₄, Li₃BO₃, Li₄SiO₄, Li₄GeO₄, LiTiOs, LiZrOs, and Li₂WO₄. The reaction-restricting layer may contain only one or two or more of these oxides, or may contain a composite compound that includes two or more of the oxides. Among these oxides, the Nb-containing oxides are preferable, and LiNbOs is much preferable.

Preferably, the reaction-restricting layer is present on the surface of the positive electrode active material in an amount of 0.1 to 1.0 part by mass with respect to 100 parts by mass of the positive electrode active material. Within this range, the reaction-restricting layer can restrict well the reaction between the positive electrode active material and the solid electrolyte.

Examples of a method for forming the reaction-restricting layer on the surface of the positive electrode active material include a sol-gel process, mechanofusion, chemical vapor deposition (CVD), physical vapor deposition (PVD), and atomic layer deposition (ALD).

The content of the positive electrode active material in the positive electrode mixture is preferably 60 to 85% by mass, in view of the further increase in the energy density of the battery.

The positive electrode mixture may contain a conductive assistant. Specific examples of the conductive assistant include carbon materials such as graphite (natural or artificial graphite), graphene, carbon black, carbon nanofibers, and carbon nanotubes. If Ag₂S, e.g., is used as the active material, conductive Ag is generated during the discharge reaction. Thus, the conductive assistant may not be added to the positive electrode mixture. If the positive electrode mixture contains the conductive assistant, the content of the conductive assistant is preferably 1.0 part by mass or more, and also preferably 7.0 parts by mass or less, and much preferably 6.5 parts by mass or less, with respect to 100 parts by mass of the content of the positive electrode active material.

The positive electrode mixture may contain a binder. Specific examples of the binder include fluorocarbon resins such as polyvinylidene fluoride (PVDF). If good moldability can be secured for forming the positive electrode mixture molded body without using the binder, as in the case where the positive electrode mixture contains a sulfide-based solid electrolyte (the detail will be described below), the binder may not be added to the positive electrode mixture.

If the positive electrode mixture contains the binder, the content of the binder is preferably 15% by mass or less and also preferably 0.5% by mass or more. If the positive electrode mixture contains a sulfide-based solid electrolyte and thus the moldability is obtained without the binder, the content of the binder is preferably 0.5% by mass or less, much preferably 0.3% by mass or less, and further preferably 0% by mass (that is, the binder is not contained).

When the battery is an all-solid-state battery (all-solid-state primary battery or all-solid-state secondary battery), the positive electrode mixture contains a solid electrolyte.

The positive electrode mixture can contain any solid electrolyte that has lithium ion conductivity. Examples of the solid electrolyte that can be contained in the positive electrode mixture include sulfide-based solid electrolytes, hydride-based solid electrolytes, halide-based solid electrolytes, and oxide-based solid electrolytes.

Examples of the sulfide-based solid electrolytes include particles such as Li₂S-P₂S₅-based glass, Li₂S-SiS₂-based glass, Li₂S-P₂S₅-GeS₂-based glass, and Li₂S-B₂S₃-based glass. In addition, thio-LISICON-type sulfide-based solid electrolytes (Li_{12-12a-b+c+6d-e}M¹_{3+a-b-c-d}M²_{b}M³_{c}M⁴_{d}M⁵₁₂₋ₑXₑ, such as Li₁₀GeP₂S₁₂ and Li_{9.54}Si_{1.74}P_{1.44}S_{11.7}Cl_{0.3} (where M¹ is Si, Ge, or Sn, M² is P or V, M³ is Al, Ga, Y, or Sb, M⁴ is Zn, Ca, or Ba, M⁵ is S or is S and O, and X is F, Cl, Br, or I, and a, b, c, d, and e satisfy 0 ≤ a < 3, 0 ≤ b + c + d ≤ 3, and 0 ≤ e ≤ 3), which attract attention in recent years due to their high Li-ion conductivity, and sulfide-based solid electrolytes that have the argyrodite crystal structure can also be used.

Examples of the hydride-based solid electrolytes include LiBH₄, and a solid solution of LiBH₄ and the following alkali metal compound (e.g., a solid solution having a mol ratio of LiBH₄ to an alkali metal compound of 1:1 to 20:1). Examples of the alkali metal compound in the solid solution include at least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amide, rubidium amide, and cesium amide.

Examples of the halide-based solid electrolytes include monoclinic LiAlCl₄, defective-spinel-type or layered LiInBr₄, and monoclinic Li₆₋₃ₘYₘX₆ (where 0 < m < 2, and X = Cl or Br). In addition, the known halide-based solid electrolytes disclosed in WO 2020/070958 and WO 2020/070955 may be used.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

Among these solid electrolytes, the sulfide-based solid electrolytes are preferable, and the sulfide-based solid electrolytes that contain Li and P are much preferable since they have high lithium ion conductivity. Further, the sulfide-based solid electrolytes that have the argyrodite crystal structure are further preferable since they have higher lithium ion conductivity and are chemically stable.

Particularly preferable examples of the sulfide-based solid electrolytes having the argyrodite crystal structure include sulfide-based solid electrolytes, such as Li₆PS₅Cl, represented by General Composition Formula (1) or (2) below.

Li_{7-x+y}PS₆₋ₓCl_{x+y} (1)

In General Composition Formula (1), 0.05 ≤ y <_ 0.9 and - 3.0x + 1.8 ≤ y ≤ - 3.0x + 5.7.

Li₇₋ₐPS₆₋ₐCl_{b}Br_{c} (2)

In General Composition Formula (2), a = b + c, 0 < a ≤ 1.8, and 0.1 ≤ b/c ≤ 10.0.

The average particle size of the solid electrolyte is preferably 0.1 pm or more, and much preferably 0.2 pm or more, in view of reduction of the grain boundary impedance. On the other hand, the average particle size of the solid electrolyte is preferably 10 pm or less, and much preferably 5 pm or less, in view of formation of sufficient contact interface between the active material and the solid electrolyte.

The content of the solid electrolyte in the positive electrode mixture is preferably 10 parts by mass or more, and much preferably 15 parts by mass or more, with respect to 100 parts by mass of the content of the positive electrode active material, in view of the further increase in the ion conductivity in the positive electrode for further improving the output characteristics of the battery. However, an excessively large amount of the solid electrolyte in the positive electrode mixture decreases the amounts of other components. Thus, the effects of these components may decrease. Therefore, the content of the solid electrolyte in the positive electrode mixture is preferably 65 parts by mass or less, and much preferably 60 parts by mass or less, with respect to 100 parts by mass of the content of the positive electrode active material.

A current collector may be added to the positive electrode. The current collector may be: a foil, a punched metal, a net, an expanded metal, or a metal foam made of metal such as aluminum or stainless steel; or a carbon sheet.

The positive electrode mixture molded body can be formed by, e.g., mixing the positive electrode active material with the conductive assistant, the binder, the solid electrolyte, etc., which are added as necessary, to prepare a positive electrode mixture, and compressing the positive electrode mixture by, e.g., pressure molding.

If the current collector is added to the positive electrode, the positive electrode can be manufactured by sticking the positive electrode mixture molded body that is formed using such a method as described above, to the current collector by, e.g., pressure joining.

The positive electrode mixture molded body may be formed by mixing the above positive electrode mixture with a solvent to prepare a positive electrode mixture-containing composition, applying the composition on a substrate such as the current collector or the solid electrolyte layer that will face the positive electrode, drying the applied composition, and then pressing the dried composition.

Examples of the solvent for the positive electrode mixture-containing composition include water and organic solvents such as N-methyl-2-pyrrolidone (NMP). If the solid electrolyte is also added to the positive electrode mixture-containing composition, a solvent that is less likely to degrade the solid electrolyte is preferable. Since the sulfide-based solid electrolyte and the hydride-based solid electrolyte cause a chemical reaction in the presence of a minute amount of water, nonpolar aprotic solvents, which are represented by hydrocarbon solvents such as hexane, heptane, octane, nonane, decane, decalin, toluene, and xylene are preferable. In particular, a super-dehydrated solvent that contains 0.001% by mass (10 ppm) or less of water is much preferable. Further, fluorine-based solvents such as "VERTREL (registered trademark)" manufactured by DU PONT-MITSUI FLUOROCHEMICALS COMPANY Ltd., "ZEORORA (registered trademark)" manufactured by ZEON CORPORATION, and "NOVEC (registered trademark)" manufactured by SUMITOMO 3M LIMITED, and also non-aqueous organic solvents such as dichloromethane and diethyl ether can be used.

The positive electrode mixture molded body has a porosity of 10% or less, and preferably 6% or less, in view of the increase in the output characteristics of the battery. The lower limit of the porosity of the positive electrode mixture molded body is, e.g., 1%.

The porosity of the positive electrode mixture molded body may be calculated by observing a cross section of the molded body with a scanning electron microscope (SEM), subjecting the image to binarization processing, and determining the proportion of void portions in the image.

The porosity of the positive electrode mixture molded body is measured as follows: The positive electrode mixture molded body is cut along a plane that is parallel to the thickness direction and passes through a line corresponding to the widest width of the molded body seen in the thickness direction. An SEM image is obtained in the central portion of the cross section of the cut molded body.

FIG. 2 illustrates a region where the porosity of the positive electrode mixture molded body is measured. The example in FIG. 2 illustrates a cross section of the cut positive electrode (positive electrode mixture molded body) 21 of the unit electrode body. The positive electrode mixture molded body 21 is cut in the thickness direction (Z direction in FIG. 2) along a line extending in the direction of the widest width of the positive electrode mixture molded body 21 (X direction) seen in the thickness direction. In the example in FIG. 2, the shape of the positive electrode mixture molded body 21 seen in the thickness direction (shape in a top view) is circular. In this case, the positive electrode mixture molded body 21 is cut in the thickness direction along a line that passes the center of the circle. If the shape seen in a top view is elliptical, the positive electrode mixture molded body 21 is cut along the major axis of the ellipse. If the shape seen in a top view is rectangular, the positive electrode mixture molded body 21 is cut along the center line between the two long sides. In the example in FIG. 2, the region surrounded by a dotted line is the central portion.

The central portion is a region that includes the center of the cross section, which is the center in the thickness direction (the position of h/2) and the center in the width direction (the position of w/2) of the positive electrode mixture molded body. The central portion is a rectangular region having a length of 25 pm in the width direction and a length of 19 pm in the thickness direction.

An SEM image of the rectangular region is subjected to binarization processing using image analysis software such as Imaged. It is determined that in the SEM image that has been subjected to the binarization processing, bright contrast (high luminance) is a material and dark contrast (low luminance) is a void. The area proportion of void portions to the image is calculated as the porosity.

For example, following equipment and conditions can be used. Scanning electron microscope: S4800 manufactured by Hitachi, Ltd.; Detector: backscattered electron emphasizing mode; Accelerating voltage: 2kV; Magnification: 5,000 times; Capturing resolution: 2,560 × 1,920; Minimum dot length: 9.9 nm (equivalent circle diameter: 11.2 nm); Minimum dot area: 98 nm²; and Analysis area: 4.81 × 108 nm².

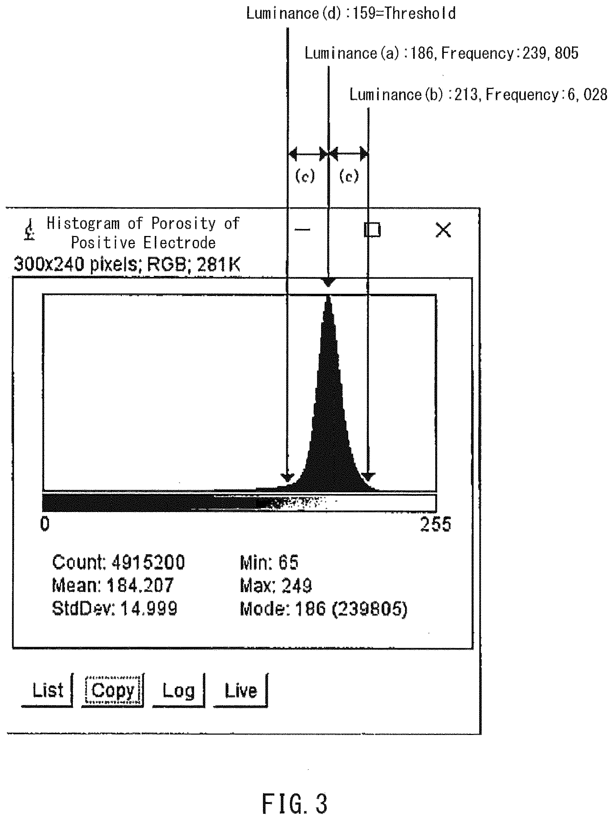

The obtained SEM image is subjected to grey scale conversion with Photoshop (registered trademark). In the conversion, a Gaussian filter (0.5 pixel) is used for noise reduction. Next, a histogram of the SEM image is converted into numbers with Imaged. FIG. 3 illustrates an example of the histogram of the SEM image. In the histogram, the luminance a at the maximum frequency is used as the center value. The minimum value b of the luminance that is higher than the center value and is at a frequency having a numerical value that is 3% or less of the numerical value of the maximum frequency is read. Luminance d (= a - c) that is lower than the center value and has a numerical value that is smaller than the center value by the difference c (= b - a) between b and a is determined. The luminance d is used as the threshold.

Further, the SEM image is subjected to binarization processing based on the previously obtained threshold d using image analysis software "Eizoukun" to divide the SEM image into low-luminance portions and high-luminance portions. The proportion of the area of the low-luminance portions in the SEM image is calculated as the porosity. For the calculation, a low-luminance portion that has luminance that is equal to or smaller than the threshold and has an area that is smaller than 900 nm² (0.09 × 10⁻² µm²) is determined as a noise component. The noise component is excluded from the calculation of the porosity.

The above-described method and conditions used to determine the porosity of the positive electrode mixture molded body can be used to determine the porosity of the negative electrode active material layer and the porosity of the solid electrolyte layer that will be described below. The method and conditions described here are also used to determine the porosities of the positive electrode mixture molded bodies, the porosities of the negative electrode active material layers, and the porosities of the solid electrolyte layers that will be described in the Examples below.

It is much preferable to compressively mold the positive electrode mixture by, e.g., pressure molding to form the positive electrode mixture molded body, in view of the increase in the density of the molded body for the decrease in the porosity as described above and the resulting further decrease in the internal resistance of the positive electrode.

Although the thickness of the positive electrode mixture molded body is ordinarily 50 pm or more, the thickness is preferably 200 pm or more in view of the further increase in the energy density of the battery. The thickness of the positive electrode mixture molded body is ordinarily 1200 pm or less. The thickness is preferably 800 pm or less in view of the further increase in the output characteristics of the battery.

The positive electrode may be manufactured by forming the positive electrode mixture layer composed of the positive electrode mixture molded body on the current collector using the positive electrode mixture-containing composition to which the solvent is added. In this case, the thickness of the positive electrode mixture layer is preferably 50 to 800 pm, and much preferably 500 pm or less in view of the further increase in the output characteristics of the battery.

### (Negative electrode)

The negative electrode of the battery includes a negative electrode active material layer that contains a negative electrode active material. For example, the negative electrode includes a molded body of a negative electrode mixture that contains the negative electrode active material, or a metal sheet, such as a lithium sheet or a lithium alloy sheet, that functions as the negative electrode active material. In the negative electrode that includes the negative electrode mixture molded body, the negative electrode mixture molded body corresponds to the negative electrode active material layer. In the metal sheet that functions as the negative electrode active material, the metal sheet corresponds to the negative electrode active material layer.

The negative electrode active material layer of the negative electrode has a porosity of 10% or less, and preferably 6% or less, in view of the increase in the output characteristics of the battery. The lower limit of the porosity of the negative electrode active material layer is, e.g., 1%. However, the porosity may be 0% if the negative electrode active material layer is the metal sheet.

The negative electrode that includes the molded body of the negative electrode mixture that contains the negative electrode active material may be a molded body (e.g., pellet) formed by molding the negative electrode mixture. Alternatively, the negative electrode may include a current collector and a layer of the negative electrode mixture molded body (negative electrode mixture layer) that is formed on the current collector.

If the negative electrode includes the negative electrode mixture molded body, examples of the negative electrode active material of the molded body include carbon materials such as graphite, simple substances that include elements such as Si and Sn, compounds (e.g., oxides), and alloys thereof. Further, lithium metal and lithium alloys (such as a lithium -aluminum alloy and a lithium-indium alloy) can be used as the negative electrode active material.

The content of the negative electrode active material in the negative electrode mixture is preferably 40 to 80% by mass in view of the further increase in the energy density of the battery.

The negative electrode mixture may contain a conductive assistant. Specific examples of the conductive assistant include the above-exemplified conductive assistants that the positive electrode mixture can contain. The content of the conductive assistant in the negative electrode mixture is preferably 10 to 30 parts by mass with respect to 100 parts by mass of the content of the negative electrode active material.

The negative electrode mixture may contain a binder. Specific examples of the binder include the above-exemplified binders that the positive electrode mixture can contain. If good moldability can be secured for forming the negative electrode mixture molded body without using the binder, as in the case where the negative electrode mixture contains a sulfide-based solid electrolyte (the detail will be described below), the binder may not be added to the negative electrode mixture.

When the negative electrode mixture contains the binder, the content of the binder is preferably 15% by mass or less and also preferably 0.5% by mass or more. When the negative electrode mixture contains a sulfide-based solid electrolyte and thus the moldability is obtained without the binder, the content of the binder is preferably 0.5% by mass or less, much preferably 0.3% by mass or less, and further preferably 0% by mass (that is, the binder is not contained).

When the battery is an all-solid-state battery, the negative electrode that includes the molded body of the negative electrode mixture contains a solid electrolyte in the negative electrode mixture. Specific examples of the solid electrolyte include the above-exemplified solid electrolytes that the positive electrode mixture can contain. Among the above-exemplified solid electrolytes, the sulfide-based solid electrolytes are preferable because they have a high lithium ion conductivity and have a function of increasing the moldability of the negative electrode mixture, the sulfide-based solid electrolytes that have the argyrodite crystal structure are much preferable, and the sulfide-based solid electrolytes that are represented by above-described General Composition Formula (1) or (2) are further preferable.

The average particle size of the solid electrolyte of the negative electrode mixture is preferably 0.1 pm or more, and much preferably 0.2 pm or more, and also preferably 10 pm or less, and much preferably 5 pm or less, for the same reason as that for the positive electrode mixture.

The content of the solid electrolyte in the negative electrode mixture is preferably 30 parts by mass or more, and much preferably 35 parts by mass or more, with respect to 100 parts by mass of the content of the negative electrode active material, in view of the further increase in the ion conductivity in the negative electrode for further improving the output characteristics of the battery. However, the excessive amount of the solid electrolyte in the negative electrode mixture decreases the amounts of other components and may decrease the effects of these components. Thus, the content of the solid electrolyte in the negative electrode mixture is preferably 130 parts by mass or less, and much preferably 110 parts by mass or less, with respect to 100 parts by mass of the content of the negative electrode active material.

A current collector may be added to the negative electrode that includes the negative electrode mixture molded body. The current collector may be: a foil, a punched metal, a net, an expanded metal, or a metal foam made of copper or nickel; or a carbon sheet.

The negative electrode mixture molded body can be formed by, for example, mixing the negative electrode active material with the conductive assistant, the solid electrolyte, the binder, etc., which are added as necessary, to prepare a negative electrode mixture, and compressing the negative electrode mixture by, e.g., pressure molding. The negative electrode that is constituted by only the negative electrode mixture molded body can be manufactured using this method.

If the current collector is added to the negative electrode, the negative electrode can be manufactured by sticking the negative electrode mixture molded body formed using such a method as described above, to the current collector by, e.g., pressure joining.

The negative electrode mixture molded body may be formed by mixing the above negative electrode mixture with a solvent to prepare a negative electrode mixture-containing composition, applying the composition on a substrate such as the current collector or the solid electrolyte layer that will face the negative electrode, drying the applied composition, and then pressing the dried composition.

The solvent of the negative electrode mixture-containing composition may be water or an organic solvent such as NMP. However, if the solid electrolyte is also added to the negative electrode mixture-containing composition, a solvent that is less likely to degrade the solid electrolyte is desirable. The various solvents that have been exemplified above as the solvents for the positive electrode mixture-containing composition to which the solid electrolyte is added are preferable.

It is much preferable to compressively mold the negative electrode mixture by, e.g., pressure molding to form the negative electrode mixture molded body, in view of the increase in the density of the molded body for the decrease in the porosity as described above and the resulting further decrease in the internal resistance of the negative electrode.

Although the thickness of the negative electrode mixture molded body is ordinarily 50 pm or more, the thickness is preferably 200 pm or more in view of the further increase in the energy density of the battery. The thickness of the negative electrode mixture molded body is ordinarily 1200 pm or less. The thickness is preferably 800 pm or less in view of the further increase in the output characteristics of the battery.

The negative electrode may be manufactured by forming the negative electrode mixture layer composed of the negative electrode mixture molded body on the current collector using the negative electrode mixture-containing composition to which the solvent is added. In this case, the thickness of the negative electrode mixture layer is preferably 50 to 800 pm, and much preferably 500 pm or less, in view of the further increase in the output characteristics of the battery.

If the negative electrode includes a lithium sheet or a lithium alloy sheet, these sheets may be used alone or stuck to the current collector.

Examples of alloy elements for the lithium alloy include aluminum, lead, bismuth, indium, and gallium, but aluminum and indium are preferable. The proportion of the alloy element (or the proportion of the total of the alloy elements if the lithium alloy includes a plurality of the alloy elements) in the lithium alloy is preferably 50% by atom or less (in this case, the remainder is lithium and unavoidable impurities).

The negative electrode that includes the lithium alloy sheet may be formed by stacking an alloy element-including layer for formation of a lithium alloy, on the surface of a lithium layer that is constituted by, e.g., a metal lithium foil (lithium-including layer) by, e.g., pressure joining, to form a stacked body, and making the stacked body in contact with a solid electrolyte in the battery to form a lithium alloy on the surface of the lithium layer. In such a negative electrode, the stacked body may include the alloy element-including layer on only one side or on both sides of the lithium layer. The stacked body can be formed by, e.g., joining a metal lithium foil to an alloy element foil by pressure joining.

The current collector may be added to the negative electrode that is produced by forming the lithium alloy in the battery. In this case, the stacked body may include the lithium layer on one side of the negative electrode current collector, and may include the alloy element-including layer on the side of the lithium layer opposite the negative electrode current collector, or the stacked body may include the lithium layer on each side of the negative electrode current collector, and may include the alloy element-including layer on the side of each lithium layer opposite the negative electrode current collector. The negative electrode current collector and the lithium layer (metal lithium foil) may be stacked on top of each other by, e.g., pressure joining.

The alloy element-including layer of the stacked body used as the negative electrode may be a foil constituted by the alloy element(s). The thickness of the alloy element-including layer is preferably 1 pm or more, and much preferably 3 pm or more, and also preferably 20 pm or less, and much preferably 12 pm or less.

The lithium layer of the stacked body used as the negative electrode may be a metal lithium foil. The thickness of the lithium layer is preferably 0.1 to 1.0 mm. Further, the thickness of the lithium sheet or the lithium alloy sheet of the negative electrode is also preferably 0.1 to 1.0 mm.

If the current collector is added to the negative electrode that includes the lithium sheet or the lithium alloy sheet, the current collector may be the above-exemplified current collector that can be used for the negative electrode that includes the negative electrode mixture molded body.

### (Solid electrolyte layer)

When the battery is an all-solid-state battery, a solid electrolyte layer is interposed between the positive electrode and the negative electrode. Specific examples of a solid electrolyte that constitutes the solid electrolyte layer include the above-exemplified solid electrolytes that the positive electrode mixture can contain. Among the above-exemplified solid electrolytes, the sulfide-based solid electrolytes are preferable because they have a high lithium ion conductivity and have a function of increasing the moldability of the negative electrode mixture, the sulfide-based solid electrolytes that have the argyrodite crystal structure are much preferable, and the sulfide-based solid electrolytes that are represented by above-described General Composition Formula (1) or (2) are further preferable.

The solid electrolyte layer may include a porous body such as a non-woven fabric made of resin, as a support.

The solid electrolyte layer has a porosity of 10% or less, and preferably 6% or less, in view of the increase in the output characteristics of the battery. The lower limit of the porosity of the solid electrolyte layer is, e.g., 1%.

The solid electrolyte layer may be formed using a method in which the solid electrolyte is compressed by, e.g., pressure molding, or a method in which the solid electrolyte is dispersed in a solvent to prepare a composition for forming the solid electrolyte layer, the composition is applied on a substrate, the positive electrode, or the negative electrode, the applied composition is dried, and the dried composition is subjected to pressure molding such as pressing, as necessary. Among them, the method in which the solid electrolyte is compressed is preferable. This method can decrease the porosity of the solid electrolyte layer as described above.

A solvent that is less likely to degrade the solid electrolyte is desirably used for the composition for forming the solid electrolyte layer. The various solvents that have been exemplified above as the solvents for the positive electrode mixture-containing composition to which the solid electrolyte is added are preferable.

The thickness of the solid electrolyte layer is preferably 10 to 200 pm.

### (Separator)

Except the case where the battery is an all-solid-state battery, the separator that is interposed between the positive electrode and the negative electrode desirably has a sufficient strength and holds much non-aqueous electrolyte. In view of this, the separator is preferably, e.g., a microporous film or a non-woven fabric that has a thickness of 10 to 50 pm and an aperture ratio of 30 to 70%, and includes polyethylene, polypropylene, or ethylene-propylene copolymers.

### (Non-aqueous electrolyte)

Except the case where the battery is an all-solid-state battery, the non-aqueous electrolyte ordinarily is a non-aqueous liquid electrolyte (non-aqueous electrolyte solution). The non-aqueous electrolyte solution includes an organic solvent and an electrolyte salt such as a lithium salt dissolved in the organic solvent. Examples of the organic solvent include but are not limited to: chain esters such as dimethyl carbonate, diethyl carbonate, ethyl methyl carbonate, and methyl propyl carbonate; cyclic esters with a high dielectric constant such as ethylene carbonate, propylene carbonate, butylene carbonate, and vinylene carbonate; and mixed solvents of chain esters and cyclic esters. Among them, a mixed solvent of chain esters as the main solvent and cyclic esters is particularly suitable.

Examples of the electrolyte salt to be dissolved in the organic solvent in preparing the non-aqueous electrolyte solution include LiPF₆, LiBF₄, LiAsF₆, LiSbF₆, LiCF₃SO₃, LiC₄F₉SO₃, LiCF₃CO₂, Li₂C₂F₄(SO₃)₂, LiCₙF₂ₙ₊ᵢSO₃ (n ≥ 2), LiN(RfSO₂)(RfSO₂), LiC(RfSO₂)₃, and LiN(RfOSO₂)₂ (where Rf and Rf are each a fluoroalkyl group). These electrolyte salts may be used individually or in combination of two or more. The concentration of the electrolyte salt in the electrolyte solution is not limited but is preferably 0.3 mol/L or more, and much preferably 0.4 mol/L or more, and also preferably 1.7 mol/L or less, and much preferably 1.5 mol/L or less.

Instead of the non-aqueous electrolyte solution, a gel-like electrolyte formed by gelling the non-aqueous electrolyte solution with a gelling agent that includes, e.g., polymer may be used as the non-aqueous electrolyte of the battery.

### (Electrode body)

The positive electrode and the negative electrode are stacked on top of each other with the solid electrolyte layer or the separator interposed therebetween to form the unit electrode body. A plurality of the unit electrode bodies is stacked on top of each other to form a stacked body that is used as the battery.

When the unit electrode body that includes the solid electrolyte layer is formed, it is preferable that the positive electrode, the negative electrode, and the solid electrolyte layer that are stacked on top of each other are subjected to pressure molding, in view of the increase in the mechanical strength of the unit electrode body and the decrease in the internal resistance.

In the stacked body that includes the plurality of stacked unit electrode bodies, adjacent ones of the unit electrode bodies are connected with each other in series. Methods for connecting the unit electrode bodies with each other are not limited. However, it is preferable to connect the positive electrode of one unit electrode body with the negative electrode of another unit electrode body adjacent to the unit electrode body with a current collector that is interposed between the two unit electrode bodies, as illustrated in FIG. 1.

The current collector that is interposed between the unit electrode bodies may be: a foil, a punched metal, a net, an expanded metal, or a metal foam that is made of metal, such as copper, nickel, or iron, that does not react with Li or made of an alloy (that includes stainless steel) that contains the metal; or a carbon sheet. The current collector that is interposed between the unit electrode bodies preferably has a thickness of 10 to 200 pm.

The current collector may be only put on the adjacent unit electrode body, or may be integrated with the unit electrode body by, e.g., sticking the current collector to the adjacent positive electrode or negative electrode.

The stacked body that includes a plurality of unit electrode bodies stacked has a relationship x × L/S, where x is the number of the unit electrode bodies stacked, L (cm) is the thickness of the unit electrode body, and S (cm²) is the electrode area of the unit electrode body. x × L/S is preferably 1 or less, and much preferably 0.9 or less, in view of the better balance between the energy density and the output characteristics of the battery. The lower limit of x × L/S is ordinarily 0.002.

### (Exterior body)

The exterior body of the battery is, e.g., a battery container that includes the exterior can and the sealing can. That is, such a battery that includes the battery container as the exterior body is a flat battery.

In the battery industry, the flat battery that has a diameter that is larger than the height is referred to as a coin-shaped battery or a button-shaped battery. There is no clear distinction between the coin-shaped battery and the button-shaped battery. If a battery of the present invention is a flat battery, the battery of the present invention includes both the coin-shaped battery and the button-shaped battery.

If the exterior body of the battery is a battery container that includes the exterior can and the sealing can, the opening may be sealed by crimping the exterior can and the sealing can with the gasket interposed therebetween as illustrated in FIG. 1. Alternatively, the exterior can and the sealing can may be stuck to each other with resin.

The exterior can and the sealing can may be made of, e.g., stainless steel. The gasket may be made of, e.g., polypropylene or nylon. Moreover, when heat resistance is required in relation to the intended use of the battery, the gasket may be made of heat-resistant resin with a melting point of more than 240°C such as: a fluorocarbon resin, e.g., a tetrafluoroethylene-perfluoroalkoxyethylene copolymer (PFA); polyphenylene ether (PEE); polysulfone (PSF); polyarylate (PAR); polyether sulfone (PES); polyphenylene sulfide (PPS); and polyether ether ketone (PEEK). Further, when the intended use of the battery requires heat resistance, the opening may be sealed by a glass hermetic seal.

The shape of the exterior body constituted by the battery container that includes the exterior can and the sealing can may be circular or polygonal, e.g., quadrangular (square or rectangular) in a plan view. In the case of the polygonal shape, the corners may be curved.

The exterior body of the battery may be a laminating film exterior body constituted by a metal laminating film such as an aluminum laminating film.

### Examples

Hereinafter, the present invention is described in detail by way of the Examples. However, it should be noted that the Examples given below are not intended to limit the scope of the present invention.

### Example 1

### <Formation of solid electrolyte layer>

A sulfide-based solid electrolyte (Li₆PS₅Cl) having the argyrodite crystal structure and an average particle size of 4 pm was fed into a powder-molding mold, and molded under pressure with a pressing machine to form a solid electrolyte layer with a thickness of 0.02 mm.

### <Production of positive electrode>

Powder of LiCoO₂ as a positive electrode active material constituted by primary particles having an average particle size of 5 pm, the sulfide-based solid electrolyte used for the solid electrolyte layer, and carbon nanotubes "VGCF" (product name) manufactured by Showa Denko K.K. as the conductive assistant were mixed at a mass ratio of 62:34:4 and kneaded well to prepare a positive electrode mixture. Next, 10 mg of the positive electrode mixture was fed onto the solid electrolyte layer in the powder-molding mold, and molded under pressure with the pressing machine to form a positive electrode that was constituted by a positive electrode mixture molded body having a thickness of 0.076 mm, on the solid electrolyte layer.

### <Production of negative electrode>

Li₄Ti₅O₁₂ having an average particle size of 5 pm, the sulfide-based solid electrolyte used for the solid electrolyte layer, and the carbon nanotubes used for the positive electrode mixture were mixed at a mass ratio of 50:41:9 and kneaded well to prepare a negative electrode mixture. Next, 13 mg of the negative electrode mixture was fed onto a side of the solid electrolyte layer opposite the positive electrode in the powder-molding mold, and molded under pressure with the pressing machine to form a negative electrode that was constituted by a negative electrode mixture molded body having a thickness of 0.127 mm, on the solid electrolyte layer. In this way, two unit electrode bodies, each of which included the positive electrode, the solid electrolyte layer, and the negative electrode that were stacked on top of each other, were produced. The unit electrode bodies each had a diameter of 7.45 mm and a thickness L of 0.022 cm. The obtained unit electrode bodies each had L/S of 0.051.

### <Assembly of battery>

A flexible graphite sheet "PERMA-FOIL (product name)" manufactured by Toyo Tanso Co., Ltd. and having a thickness of 0.1 mm and an apparent density of 1.1 g/cm³ was die-cut into three pieces that had the same size as the unit electrode body. A first piece of the graphite sheet was placed on the inner bottom of a stainless-steel sealing can around which a polypropylene annular gasket was fitted. Next, a first one of the unit electrode bodies was put on the first piece of the graphite sheet with the negative electrode in contact with the graphite sheet. A second piece of the graphite sheet as a current collector was placed on the first unit electrode body. A second one of the unit electrode bodies was put on the second piece of the graphite sheet with the negative electrode in contact with the graphite sheet. Finally, the remaining piece of the graphite sheet was placed on the positive electrode of the second unit electrode body.

The sealing can was covered with a stainless-steel exterior can. Then, the opening edge of the exterior can was crimped inward to seal the opening. Consequently, an all-solid-state secondary battery that included the two unit electrode bodies that were connected with each other in series by the graphite sheets (current collectors) and had the structure illustrated in FIG. 1 was produced. FIG. 1 does not illustrate the graphite sheet placed between the sealing can and the stacked electrode bodies, and the graphite sheet placed between the exterior can and the stacked electrode bodies.

### Example 2

Two unit electrode bodies were produced similarly as in Example 1 except changing the amounts of the positive electrode mixture to 25 mg and the negative electrode mixture to 33 mg. The two unit electrode bodies each had L of 0.053 cm and L/S of 0.121. An all-solid-state secondary battery was produced similarly as in Example 1 except using these unit electrode bodies.

### Example 3

Two unit electrode bodies were produced similarly as in Example 1 except changing the amounts of the positive electrode mixture to 35 mg and the negative electrode mixture to 46 mg. The two unit electrode bodies each had L of 0.073 cm and L/S of 0.167. An all-solid-state secondary battery was produced similarly as in Example 1 except using these unit electrode bodies.

### Example 4

Two unit electrode bodies were produced similarly as in Example 1 except changing the amounts of the positive electrode mixture to 52 mg and the negative electrode mixture to 69 mg. The two unit electrode bodies each had L of 0.107 cm and L/S of 0.246. An all-solid-state secondary battery was produced similarly as in Example 1 except using these unit electrode bodies.

### Example 5

Two unit electrode bodies were produced similarly as in Example 1 except changing the amounts of the positive electrode mixture to 76 mg and the negative electrode mixture to 100 mg. The two unit electrode bodies each had L of 0.156 cm and L/S of 0.358. An all-solid-state secondary battery was produced similarly as in Example 1 except using these unit electrode bodies.

### Example 6

Two unit electrode bodies were produced similarly as in Example 1 except changing the amounts of the positive electrode mixture to 300 mg and the negative electrode mixture to 396 mg. The two unit electrode bodies each had a diameter of 16 mm, L of 0.134 cm, and L/S of 0.067. An all-solid-state secondary battery was produced similarly as in Example 1 except using these unit electrode bodies.

### Example 7

Three unit electrode bodies were produced similarly as in Example 1 except changing the amounts of the positive electrode mixture to 41 mg and the negative electrode mixture to 54 mg. The three unit electrode bodies each had a diameter of 6.7 mm, L of 0.105 cm, and L/S of 0.297.

The same graphite sheet as the one used in Example 1 was die-cut into four pieces that had the same size as the unit electrode body. A first piece of the graphite sheet was placed on the inner bottom of a stainless-steel sealing can around which a polypropylene annular gasket was fitted. Next, a first one of the unit electrode bodies was put on the first piece of the graphite sheet with the negative electrode in contact with the graphite sheet. A second piece of the graphite sheet as a current collector was placed on the first unit electrode body. A second one of the unit electrode bodies was put on the second piece of the graphite sheet with the negative electrode in contact with the graphite sheet. A third piece of the graphite sheet as a current collector was placed on the second unit electrode body. Next, a third one of the unit electrode bodies was put on the third piece of the graphite sheet with the negative electrode in contact with the graphite sheet. Then, a fourth piece of the graphite sheet was placed on the positive electrode of the third unit electrode body. The sealing can was covered with a stainless-steel exterior can. Then, the opening edge of the exterior can was crimped inward to seal the opening. Consequently, an all-solid-state secondary battery that included the stacked body that included the three unit electrode bodies that were connected with each other in series by the graphite sheets (current collectors).

### Example 8

Powder of LiCoO₂ as a positive electrode active material constituted by primary particles having an average particle size of 5 pm, the sulfide-based solid electrolyte used for the solid electrolyte layer of Example 1, and carbon nanotubes ("VGCF" (product name) manufactured by Showa Denko K.K.) as the conductive assistant, and PVDF as the binder were mixed at a mass ratio of 61.5:34:4:0.5 and kneaded well to prepare a positive electrode mixture.

Li₄Ti₅O₁₂ having an average particle size of 5 pm, the sulfide-based solid electrolyte used for the positive electrode mixture, the carbon nanotubes used for the positive electrode mixture, and PVDF as the binder were mixed at a mass ratio of 49.5:41:9:0.5 and kneaded well to prepare a negative electrode mixture.

Two unit electrode bodies were produced similarly as in Example 1 except using the positive electrode mixture and the negative electrode mixture and changing the amounts of the positive electrode mixture to 76 mg and the negative electrode mixture to 100 mg. The two unit electrode bodies each had L of 0.156 cm and L/S of 0.358. An all-solid-state secondary battery was produced similarly as in Example 1 except using these unit electrode bodies.

### Comparative Example 1

Two unit electrode bodies were produced similarly as in Example 1 except changing the amounts of the positive electrode mixture to 1 mg and the negative electrode mixture to 1.3 mg. The two unit electrode bodies each had L of 0.004 cm and L/S of 0.009. An all-solid-state secondary battery was produced similarly as in Example 1 except using these unit electrode bodies.

### Comparative Example 2

Two unit electrode bodies were produced similarly as in Example 1 except changing the amounts of the positive electrode mixture to 50 mg and the negative electrode mixture to 66 mg. The two unit electrode bodies each had a diameter of 5.7 mm, L of 0.175 cm, and L/S of 0.686. An all-solid-state secondary battery was produced similarly as in Example 1 except using these unit electrode bodies.

### Comparative Example 3

Two unit electrode bodies were produced similarly as in Example 1 except changing the amounts of the positive electrode mixture to 109 mg and the negative electrode mixture to 144 mg. The two unit electrode bodies each had L of 0.223 cm and L/S of 0.511. An all-solid-state secondary battery was produced similarly as in Example 1 except using these unit electrode bodies.

### Comparative Example 4

Two unit electrode bodies were produced similarly as in Example 1 except changing the amounts of the positive electrode mixture to 76 mg and the negative electrode mixture to 100 mg and adjusting the pressing force to adjust the thickness of the positive electrode mixture molded body and the thickness of the negative electrode mixture molded body. The two unit electrode bodies each had L of 0.169 cm and L/S of 0.387. An all-solid-state secondary battery was produced similarly as in Example 1 except using these unit electrode bodies.

The all-solid-state secondary batteries of the Examples and the Comparative Examples were subjected to the following evaluations.

### <Output characteristic evaluation>

The C rate for 80% of the capacity was determined using the method described below. The C rate was used to evaluate the output characteristics of each battery. Each battery was charged by constant-current and constant-voltage charging in which constant-current charging that was performed at a current value of 0.02 C until the battery voltage reached 5.2 V (7.8 V for Example 7 only) was combined with constant-voltage charging that was performed at a voltage of 5.2 V (7.8 V for Example 7 only) until the current value decreased to 0.002 C. Next, constant-current discharge was performed at a current value of 0.02 C until the battery voltage reached 2.0 V (3.0 V for Example 7 only), to measure the 0.02 C discharge capacity of each battery.

After the 0.02 C discharge capacity measurement, a series of operations that includes: charging each battery by the constant-current and constant-voltage charging under the same conditions as those in the 0.02 C discharge capacity measurement; and discharging each battery by constant-current discharge at an optional current value until the battery voltage reached 2.0 V (3.0 V for Example 7 only) was repeated while using different current values for each constant-current discharge. Consequently, the maximum current value that provided 80% of the 0.02 C discharge capacity was determined. The maximum current value was divided by the 0.02 C discharge capacity to determine the C rate for 80% of the capacity. The battery having a larger C rate for 80% of the capacity has more excellent output characteristics.

### <Energy density>

It was supposed that the operation voltage of each battery during the determination of the 0.02 C discharge capacity in the output characteristic evaluation was 4.6 V (6.9 V for Example 7 only). The operation voltage was multiplied by the 0.02 C discharge capacity to obtain a value (Wh). The value (Wh) was divided by the volume (L) of the battery to obtain the energy density of each battery.

Tables 1 and 2 show the configuration of the unit electrode bodies of the batteries of the Examples and Comparative Examples. Table 3 shows the results of the above evaluations.

**[Table 1]**

| | Unit electrode body | | | |
|---|---|---|---|---|
| | Number (x) | L (cm) | L/S | x × L/S |
| Ex. 1 | 2 | 0.022 | 0.051 | 0.102 |
| Ex. 2 | 2 | 0.053 | 0.121 | 0.242 |
| Ex. 3 | 2 | 0.073 | 0.167 | 0.334 |
| Ex. 4 | 2 | 0.107 | 0.246 | 0.492 |
| Ex. 5 | 2 | 0.156 | 0.358 | 0.716 |
| Ex. 6 | 2 | 0.134 | 0.067 | 0.134 |
| Ex. 7 | 3 | 0.105 | 0.297 | 0.891 |
| Ex. 8 | 2 | 0.156 | 0.358 | 0.716 |
| Comp. Ex. 1 | 2 | 0.004 | 0.009 | 0.018 |
| Comp. Ex. 2 | 2 | 0.175 | 0.686 | 1.372 |
| Comp. Ex. 3 | 2 | 0.223 | 0.511 | 1.022 |
| Comp. Ex. 4 | 2 | 0.169 | 0.387 | 0.774 |

| | | | | |
|---|---|---|---|---|
| *Example: Ex., Comparative Example: Comp. Ex. | | | | |

**[Table 2]**

| | Unit electrode body | | | | |
|---|---|---|---|---|---|
| | Positive electrode mixture molded body | | Negative electrode mixture molded body | | Porosity (%) of solid electrolyte layer |
| | Porosity (%) | Binder content (% by mass) | Porosity (%) | Binder content (% by mass) | |
| Ex. 1 | 8 | 0 | 8 | 0 | 8 |
| Ex. 2 | 8 | 0 | 8 | 0 | 8 |
| Ex. 3 | 8 | 0 | 8 | 0 | 8 |
| Ex. 4 | 8 | 0 | 8 | 0 | 8 |
| Ex. 5 | 8 | 0 | 8 | 0 | 8 |
| Ex. 6 | 8 | 0 | 8 | 0 | 8 |
| Ex. 7 | 8 | 0 | 8 | 0 | 8 |
| Ex. 8 | 8 | 0.5 | 8 | 0.5 | 8 |
| Comp. Ex. 1 | 8 | 0 | 8 | 0 | 8 |
| Comp. Ex. 2 | 8 | 0 | 8 | 0 | 8 |
| Comp. Ex. 3 | 8 | 0 | 8 | 0 | 8 |
| Comp. Ex. 4 | 15 | 0 | 15 | 0 | 15 |

| | | | | | |
|---|---|---|---|---|---|
| *Example: Ex., Comparative Example: Comp. Ex. | | | | | |

**[Table 3]**

| | C rate for 80% of capacity | Energy density (Wh/L) |
|---|---|---|
| Ex. 1 | 20 | 202 |
| Ex. 2 | 11 | 214 |
| Ex. 3 | 5.7 | 216 |
| Ex. 4 | 2.6 | 218 |
| Ex. 5 | 1.2 | 219 |
| Ex. 6 | 1.6 | 219 |
| Ex. 7 | 2.7 | 218 |
| Ex. 8 | 1.1 | 219 |
| Comp. Ex. 1 | 70 | 112 |
| Comp. Ex. 2 | 0.9 | 220 |
| Comp. Ex. 3 | 0.6 | 220 |
| Comp. Ex. 4 | 0.7 | 203 |

| | | |
|---|---|---|
| *Example: Ex., Comparative Example: Comp. Ex. | | |

As shown in Tables 1 to 3, the all-solid-state secondary batteries of Examples 1 to 8 that each included the plurality of unit electrode bodies, adjacent ones of which were connected with each other in series, had appropriate values of L/S and L, and had an appropriate porosity of the positive electrode mixture molded body, an appropriate porosity of the negative electrode mixture molded body, and an appropriate porosity of the solid electrolyte layer each had a high C rate for 80% of the capacity, excellent output characteristics, and a large energy density.

The battery of Comparative Example 1 that included the unit electrode bodies that had an excessively small thickness had a smaller energy density. The battery of Comparative Example 2 that included the unit electrode bodies that had excessively large L/S, the battery of Comparative Example 3 that included the unit electrode bodies that had excessively large L/S and L, and the battery of Comparative Example 4 that included the unit electrode bodies that had an excessively large porosity of the positive electrode mixture molded body, an excessively large porosity of the negative electrode mixture molded body, and an excessively large porosity of the solid electrolyte layer each had a lower C rate for 80% of the capacity and inferior output characteristics.

The invention may be embodied in other forms without departing from the essential characteristics thereof. The embodiments disclosed in this application are to be considered in all respects as illustrative and not limitative. The scope of the invention is indicated by the appended claims rather than by the foregoing description, and all changes which come within the meaning and range of equivalency of the claims are intended to be embraced therein.

### Industrial Applicability

A battery according to the present invention is applicable to uses similar to conventionally known uses of primary batteries and secondary batteries.

### Description of Reference Numerals

- 1: battery
- 2: unit electrode body
- 21: positive electrode
- 22: negative electrode
- 23: solid electrolyte layer or separator
- 3: exterior can
- 4: sealing can
- 5: gasket

## Claims

1. A battery comprising:
a plurality of unit electrode bodies,
each unit electrode body comprising: a positive electrode that includes a molded body of a positive electrode mixture that contains a positive electrode active material; a negative electrode that includes a negative electrode active material layer that contains a negative electrode active material; and a solid electrolyte layer or a separator that is interposed between the positive electrode and the negative electrode, the plurality of unit electrode bodies being stacked on top of each other,
wherein adjacent ones of the unit electrode bodies are connected with each other in series,
L/S ≤ 0.5 and 0.02 ≤ L ≤ 0.20, where L (cm) is a thickness of each unit electrode body, and S (cm²) is an electrode area of the unit electrode body, and
the molded body of the positive electrode mixture and the negative electrode active material layer each have a porosity of 10% or less, and when the solid electrolyte layer is included, the solid electrolyte layer has a porosity of 10% or less.

2. The battery according to claim 1, wherein x × L/S ≤ 1, where x is a total number of the unit electrode bodies.

3. The battery according to claim 1, wherein L/S ≤ 0.3.

4. The battery according to claim 1, wherein 0.05 ≤ L ≤ 0.20.

5. The battery according to claim 1, wherein S is 20 or less.

6. The battery according to claim 1, wherein a content of the positive electrode active material in the positive electrode mixture is 60 to 85% by mass.

7. The battery according to claim 6, wherein the positive electrode mixture further contains a solid electrolyte and a conductive assistant, and a content of the solid electrolyte in the positive electrode mixture is 10 to 65 parts by mass, and a content of the conductive assistant in the positive electrode mixture is 1.0 to 6.5 parts by mass, with respect to 100 parts by mass of the content of the positive electrode active material in the positive electrode mixture.

8. The battery according to claim 7, wherein the positive electrode mixture contains a sulfide-based solid electrolyte as the solid electrolyte.

9. The battery according to claim 1, wherein the positive electrode mixture does not contain a binder, or the positive electrode mixture contains a binder and a content of the binder in the positive electrode mixture is 0.5% by mass or less.

10. The battery according to claim 1, wherein the negative electrode includes a molded body of a negative electrode mixture that contains the negative electrode active material, as the negative electrode active material layer, and a content of the negative electrode active material in the negative electrode mixture is 40 to 80% by mass.

11. The battery according to claim 10, wherein the negative electrode mixture further contains a solid electrolyte, and a content of the solid electrolyte in the negative electrode mixture is 30 to 130 parts by mass with respect to 100 parts by mass of the content of the negative electrode active material in the negative electrode mixture.

12. The battery according to claim 11, wherein the negative electrode mixture contains a sulfide-based solid electrolyte as the solid electrolyte.

13. The battery according to claim 10, wherein the negative electrode mixture does not contain a binder, or the negative electrode mixture contains a binder and a content of the binder in the negative electrode mixture is 0.5% by mass or less.

14. The battery according to claim 1, wherein each unit electrode body comprises the solid electrolyte layer between the positive electrode and the negative electrode, and the solid electrolyte layer contains a sulfide-based solid electrolyte.

15. The battery according to claim 8, 12, or 14, wherein the sulfide-based solid electrolyte has an argyrodite crystal structure and is represented by general composition formula (1) or (2) described below,
Li_{7-x+y}PS₆₋ₓCl_{x+y} (1)
where 0.05 ≤ y <_ 0.9 and - 3.0x + 1.8 ≤ y <_ - 3.0x + 5.7,
Li₇₋ₐPS₆₋ₐCl_{b}Br_{c} (2)
where a = b + c, 0 < a ≤ 1.8, and 0.1 ≤ b/c ≤ 10.0.

16. The battery according to claim 1, wherein each unit electrode body comprises the solid electrolyte layer between the positive electrode and the negative electrode, and the solid electrolyte layer has a thickness of 10 to 200 pm.

17. The battery according to claim 1, wherein a current collector is placed between adjacent ones of the unit electrode bodies, and the current collector connects the adjacent unit electrode bodies with each other in series.
